# EUROPÄISCHE PATENTSCHRIFT

(11) **EP 1 874 501 B1**
(45) Veröffentlichungstag und Bekanntmachung des Hinweises auf die Patenterteilung: **02.06.2010**
(21) Anmeldenummer: 06722557.3
(22) Anmeldetag: 03.03.2006
(51) Int. Cl.: B23P 19/04, B60J 10/00, B62D 65/06, B25J 17/02

(54) **VORRICHTUNG UND VERFAHREN ZUR BEFESTIGUNG EINES DICHTUNGSPROFILS AUF EINEM FLANSCH**
DEVICE AND METHOD FOR FIXING A PROFILED SEALING ELEMENT TO A FLANGE
DISPOSITIF ET PROCÉDÉ SERVANT A FIXER UN PROFILE D'ÉTANCHÉITÉ SUR UN BORD

(30) Priorität: 20.04.2005 DE 102005018459
(43) Veröffentlichungstag der Anmeldung: 09.01.2008
(73) Patentinhaber: VOLKSWAGEN AG, 38436 Wolfsburg (DE)
(72) Erfinder: MÜLLER, Waldemar, 38446 Wolfsburg (DE); BEITHIEN, Ralf, 38442 Wolfsburg (DE); SIEMANN, Gunnar, 38446 Wolfsburg (DE)
(74) Vertreter: Scheffler, Jörg
(86) Internationale Anmeldenummer: PCT/DE2006/000391
(87) Internationale Veröffentlichungsnummer: WO 2006/111117

(56) Entgegenhaltungen:
- EP-A- 0 497 048
- EP-A- 0 822 019
- EP-A- 0 894 563
- EP-A- 1 440 831
- DE-A1- 3 903 809
- DE-A1- 10 023 332
- DE-A1- 19 904 183
- US-A- 4 620 354
- US-A- 5 067 225
- US-B1- 6 691 388

## Beschreibung

Die Erfindung betrifft eine an einem Handhabungselement fixierbare Vorrichtung zur Befestigung eines Dichtungsprofils auf einem Flansch, insbesondere einem Flansch einer Karosserieöffnung, mit zwei drehbar ausgebildeten Formrollen, welche derart angeordnet sind, dass sie das auf dem Flansch angeordnete Dichtungsprofil zwischen sich aufnehmen und eine Verformungskraft auf das Dichtungsprofil übertragen, wobei zwischen einem zur Fixierung an dem Handhabungselement vorgesehenen und die Vorrichtung aufnehmenden Gehäuseelement und der Vorrichtung ein Ausgleichselement angeordnet ist, welches eine Relativbewegung zwischen der Vorrichtung und dem Handhabungselement ermöglicht.

Eine Vorrichtung der genannten Art wird bereits in EP 497 048 A1 beschrieben. Eine derartige Vorrichtung kann beispielsweise zur automatisierten Montage eines Dichtungsprofils auf einen Flansch einer Türöffnung einer Kraftfahrzeugkarosserie eingesetzt werden. Dabei wird mittels der Vorrichtung das Dichtungsprofil zunächst auf den Flansch aufgesetzt und anschließend wird das aufgelegte Profil zur Fixierung auf dem Flansch verformt. Dazu wird die Vorrichtung mittels eines Handhabungselementes entlang des Flansches der Türöffnung geführt. Zum Ausgleich von Programmiertoleranzen und Maßtoleranzen in der Position des Flansches ist zwischen dem Handhabungselement und der Vorrichtung ein Ausgleichselement angeordnet, welches einen vorbestimmten begrenzten Bewegungsgrad zwischen Vorrichtung und Handhabungselement erlaubt. Durch das Ausgleichselement werden Bewegungen der Vorrichtung senkrecht zu einer Vorschubrichtung (in Richtung der x-Achse) der Vorrichtung ausgeglichen. Dabei bewegt sich jeweils die gesamte Vorrichtung (in Richtung der y- und z-Achse) relativ zum Handhabungselement, was sich aufgrund des Gewichts der Vorrichtung als nachteilig erwiesen hat. Außerdem ist durch die Ausweichbewegung der Vorrichtung, insbesondere bei einer Bewegung in Richtung der z-Achse, ein erheblicher Ausweichraum erforderlich, so dass ein Einsatz der Vorrichtung bei eingeschränkten räumlichen Verhältnissen kaum möglich ist. Weiterhin verursacht diese Vorrichtung bei wechselnden Flanschdicken entlang des Flanschverlaufs erhebliche Störungs- und Ausfallzeiten. Einerseits wird das Dichtungsprofil bei kleinen Flanschdicken nicht ordnungemäß auf dem Flansch fixiert, da die durch die Formrollen ausgeübte Verformungskraft nicht für eine Fixierung des Dichtungsprofils auf dem Flansch bzw. für eine Verformung des in dem Dichtungsprofil angeordneten Metallstreifens ausreicht. Andererseits wird das Dichtungsprofil bei großen Flanschdicken einer derart großen Verformungskraft ausgesetzt, dass es zu einer Zerstörung des Dichtungsprofils kommen kann, wodurch die einwandfreie Dichtfunktion des Profils nicht mehr gewährleistet ist. Teilweise kann es auch zu einer Verformung des Flansches in diesen Bereichen kommen, was dazu führen kann, dass beispielsweise eine mit der Türöffnung korrespondierende Tür nicht mehr richtig schließt.

Eine weitere Vorrichtung zur automatisierten Montage eines Dichtungsprofils auf einen Flansch einer Türöffnung einer Kraftfahrzeugkarosserie ist aus der US 4,620,354 bekannt. Der Vorrichtung sind Ausgleichselemente zugeordnet, welche abweichende Flanschlagen in horizontaler und vertikaler Richtung ausgleichen können_{.}

Durch DE 39 03 809 C2 ist ein Handrollforminggerät zur Montage eines Dichtungsprofils auf einem Flansch bekannt, wobei der Flansch beispielsweise um eine Tür oder eine ähnliche Öffnung auf der Karosserie eines Kraftfahrzeugs umläuft. Um die Vorrichtung in die Lage zu versetzen sich wechselnden Flanschdicken entlang der Länge des Flansches anzupassen, sind geeignete elastische Befestigungseinrichtungen für die Formrollen vorgesehen, durch welche unabhängig von der jeweiligen Flanschdicke im Wesentlichen konstante Verformungskräfte auf das Dichtungsprofil ausgeübt werden können. Ausgleichselemente, welche eine Relativbewegung zwischen einem Handhabungselement und der Vorrichtung ermöglichen, sind hier nicht erforderlich, da es sich bei der Vorrichtung um ein Handrollforminggerät handelt und ein derartiger Ausgleich von Toleranzen in der Position des Flansches manuell durch die Bedienperson erfolgt. Ein Ausgleich von unterschiedlichen Flanschhöhen ist durch diese Vorrichtung ebenfalls nicht möglich und auch nicht erforderlich.
Weiterhin sind durch DE 690 09 155 T2, DE 40 34 212 A1, DE 40 35 366 A1, DE 38 52 475 T2 und DE 697 02 372 T2 weitere Vorrichtungen zur Fixierung von Dichtungsprofilen auf einem Flansch bekannt.

Vor diesem Hintergrund liegt der Erfindung die Aufgabe zugrunde, eine Vorrichtung der eingangs genannten Art derart zu verbessern, dass sowohl Programmiertoleranzen des Handhabungselementes als auch Maß- bzw. Lagetoleranzen des Flanschens kompensiert werden können.

Diese Aufgabe wird gelöst mit einer Vorrichtung gemäß den Merkmalen des Patentanspruchs 1 und mit einem Verfahren gemäss den Merkmalen des Patentanspruchs 9. Die Unteransprüche betreffen besonders zweckmäßige Weiterbildungen der Erfindung.

Erfindungsgemäß ist also eine an einem Handhabungselement fixierbare Vorrichtung zur Befestigung eines Dichtungsprofils auf einem Flansch vorgesehen, bei der zwischen einem die Formrollen lagernden Trägerelement und der Vorrichtung ein eine Relativbewegung zwischen dem Trägerelement und der Vorrichtung ermöglichendes zweites Ausgleichselement vorgesehen ist und dass zumindest einer der Formrollen ein drittes Ausgleichselement zugeordnet ist, durch welches ein Abstand zwischen den beiden Formrollen an eine wechselnde Flanschdicke anpassbar ist. Hierdurch kann mittels der Vorrichtung ein automatisiertes Verfahren zur Befestigung eines Dichtungsprofils durchgeführt und dadurch ein gleichförmiger Prozess zur Verfügung gestellt werden, wobei durch die Vorrichtung einerseits Programmiertoleranzen des Handhabungselementes, sowie wechselnde Flanschlagen bzw. Flanschpositionen und andererseits auch wechselnde Ausbildungen des Flansches entlang des Flanschverlaufs, beispielsweise wechselnde Flanschdicken und Höhenunterschiede ausgeglichen werden können. Durch das erste Ausgleichselement wird ein wechselnder Abstand (entlang der y-Achse) des Handhabungselementes von dem Flansch senkrecht zur Vorschubrichtung (entlang der x-Achse) der Vorrichtung ausgeglichen, welcher beispielsweise aus wechselnden Flanschlagen bzw. Programmiertoleranzen des Handhabungselementes resultiert. Durch das dritte Ausgleichselement werden wechselnde Flanschdicken entlang des Flanschverlaufes ausgeglichen, welche beispielsweise durch Maßtoleranzen der Bleche oder durch zwei Bleche verbindende Schweißpunkte verursacht werden. Durch das zweite Ausgleichselement werden Höhenunterschiede (entlang der z-Achse) ausgeglichen. Diese Höhenunterschiede resultieren beispielsweise aus Maßtoleranzen oder wechselnde Flanschlagen bzw. Flanschpositionen. Außerdem muss durch die Anordnung des zweiten Ausgleichselementes zwischen der Vorrichtung und einem die Formrollen lagernden Trägerelement nicht die gesamte Vorrichtung die Ausweichbewegung durchführen, sondern ausschließlich das Trägerelement mit den gelagerten Formrollen. Hierdurch kann die Vorrichtung auch bei eingeschränktem Raumangebot eingesetzt werden.

Dabei erweist es sich als besonders vorteilhaft, wenn zumindest eines der Ausgleichselemente elastisch verformbar ausgebildet ist. Hierdurch kehrt das Ausgleichselement nach der Ausgleichsbewegung wieder in seinen ursprünglichen Zustand zurück und steht für eine weitere Bearbeitung wieder mit den voreingestellten Abständen zur Verfügung.

Besonders vorteilhaft ist hierbei, wenn zumindest eines der Ausgleichselemente eine Feder aufweist. Hierdurch wird ein elastisches Ausgleichselement zur Verfügung gestellt, welches nahezu störungs- und wartungsfrei ist.

In einer weiteren zweckmäßigen Weiterbildung ist vorgesehen, dass zwischen dem die Vorrichtung aufnehmenden Gehäuseelement und der Vorrichtung eine Führung vorgesehen ist. Hierdurch wird eine definierte Relativbewegung zwischen der Vorrichtung und dem Gehäuseelement entlang der y-Achse ermöglicht. Verschiebungen entlang der x-Achse oder der z-Achse können hierdurch ausgeschlossen werden, so dass die Vorrichtung in Vorschubrichtung dem programmierten Verlauf des Handhabungselementes entsprechend positioniert werden kann.

Eine andere vorteilhafte Weiterbildung wird auch dadurch erreicht, dass der Achsabstand der Formrollen stufenlos einstellbar ist, um so eine Anpassung an nahezu beliebige Dichtungsprofile und Materialstärken zu ermöglichen.

Erfindungsgemäß ist weiterhin vorgesehen, dass die durch die Formrollen übertragende Verformungskraft stufenlos einstellbar ist, um so die Fixierkräfte des Dichtungsprofils und damit die Belastbarkeit des Profils im Gebrauch an die jeweiligen Erfordernisse anpassen zu können. Beispielsweise können so auch unterschiedliche Fixierkräfte in verschiedenen Abschnitten des Dichtungsprofils vorgesehen werden.

Eine andere zweckmäßige Weiterbildung der vorliegenden Erfindung wird auch durch eine Sensoreinrichtung zur Überprüfung der Lage des Dichtungsprofils geschaffen. Dabei kann die Überprüfung der Lage des Dichtungsprofils sowohl vor als auch nach der Befestigung des Dichtungsprofils auf dem Flansch erfolgen.

Vorteilhafterweise ist vorgesehen, dass die Vorrichtung mittels eines programmierten Handhabungselementes entlang einer definierten Bahn auf dem Flansch verfahrbar ist. Hierdurch kann ein automatisiertes Rollforming-Verfahren zur Verfügung gestellt werden, welches durch eine entsprechende Programmierung problemlos an unterschiedliche Öffnungsausschnitte von Karosserien angepasst werden kann.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine Prinzipskizze einer Arbeitsstation zum Befestigen eines Dichtungsprofils auf einem Flansch;
- Fig. 2: eine perspektivische und vergrößerte Darstellung einer erfindungsgemäßen Vorrichtung;
- Fig. 3: die erfindungsgemäße Vorrichtung in einer anderen perspektivischen und vergrößerten Darstellung;
- Fig.4: eine vergrößerte Darstellung des ersten Ausgleichselementes;
- Fig. 5: eine vergrößerte Darstellung des zweiten Ausgleichselementes;
- Fig.6: eine vergrößerte Darstellung des dritten Ausgleichselementes.

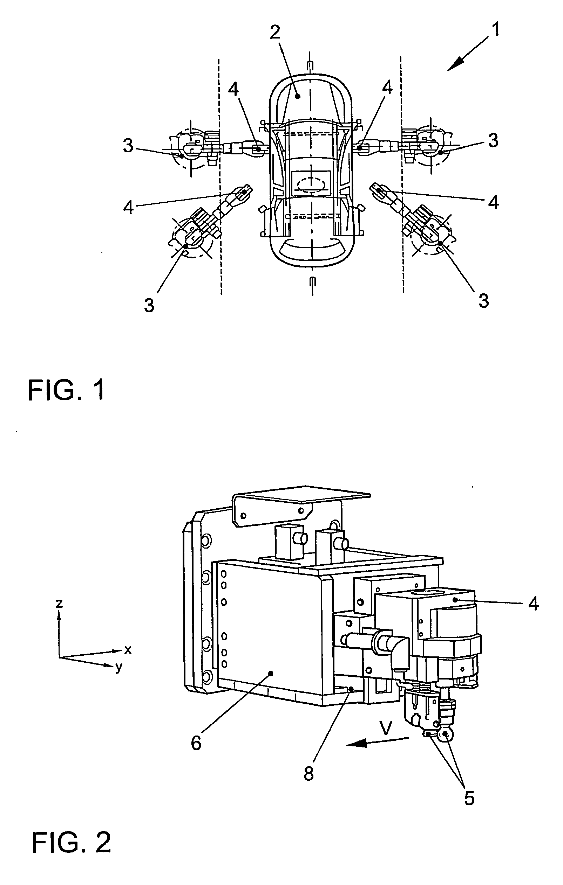

Figur 1 zeigt eine Prinzipskizze einer Arbeitsstation 1 zum Befestigen eines Dichtungsprofils auf einem Flansch einer Karosserieöffnung, insbesondere einer Türöffnung oder einer Heckklappenöffnung, einer Kraftfahrzeugkarosserie 2. Das Dichtungsprofil ist als Endlosdichtung ausgebildet und wird manuell auf den die Karosserieöffnung umlaufenden Flansch aufgelegt. Innerhalb der Arbeitsstation 1 sind vier als Roboter ausgebildete Handhabungselemente 3 zum Befestigen des Dichtungsprofils- auf den jeweiligen Flansch vorgesehen, wobei jedes Handhabungselement 3 jeweils eine erfindungsgemaße Vorrichtung 4 zum Befestigen eines Dichtungsprofils aufweist.

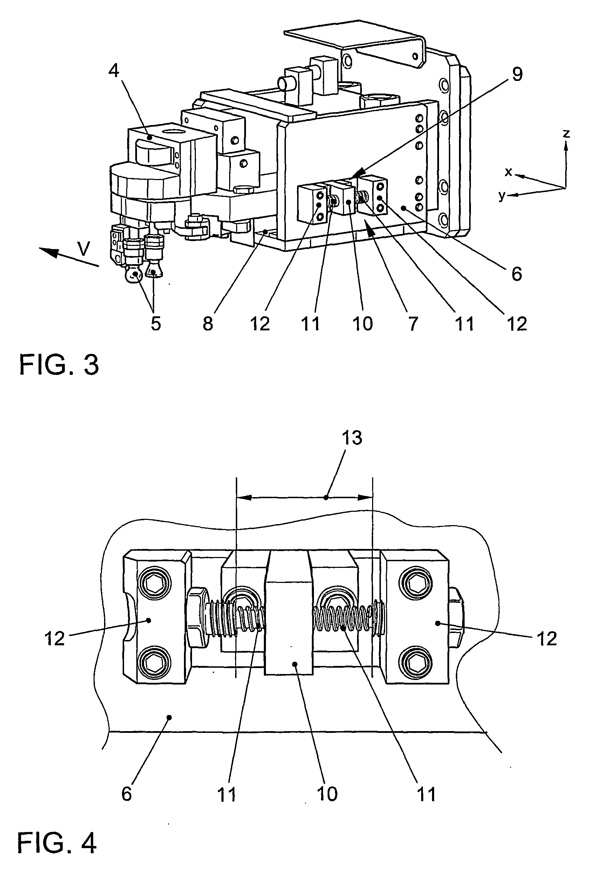

Figur 2 und Figur 3 zeigen die erfindungsgemäße Vorrichtung 4 zum Befestigen des Dichtungsprofils in vergrößerten Perspektivdarstellungen und unterschiedlichen Ansichten. Zur Befestigung des Dichtungsprofils auf dem Flansch weist die Vorrichtung 4 zwei Formrollen 5 auf, welche in der Betriebsstellung der Vorrichtung 4 beidseitig des zu befestigenden Dichtungsprofils angeordnet sind. Die Formrollen 5 übertragen im Betrieb der Vorrichtung 4 eine Verformungskraft auf das Dichtungsprofil, welche einen in dem Profil angeordneten Metallstreifen derart verformt, dass das Dichtungsprofil fest auf dem Flansch fixiert ist. Die Vorrichtung 4 wird durch das Handhabungselement 3 entlang einer Vorschubrichtung V, parallel zur x-Achse, auf dem Flansch verfahren. Zwischen der Vorrichtung 4 und einem die Vorrichtung 4 aufnehmenden Gehäuseelement 6 ist ein erstes Ausgleichselement 7 vorgesehen, welches eine Relativbewegung zwischen dem Gehäuseelement 6 und der Vorrichtung 4 entlang der y-Achse ermöglicht. Mittels des ersten Ausgleichselementes 7 erfolgt eine Federung der gesamten Vorrichtung 4 entlang der Y-Achse, zum Ausgleich von unterschiedlichen Flanschlagen. Mittels des Gehäuseelementes 6 ist die Vorrichtung 4 an dem Handhabungselement 3 fixierbar. Zwischen der Vorrichtung 4 und Gehäuseelement 6 ist eine parallel zur y-Achse ausgerichtete Führung 8 angeordnet. Ein durch eine Öffnung 9 des Gehäuseelementes 6 hindurch ragendes Bauteil 10 der Vorrichtung 4 stützt sich durch jeweils eine Feder 11 an zwei Anschlägen 12 des Gehäuseelementes 6 ab.

In Figur 4, einer vergrößerten Darstellung des ersten Ausgleichselementes 7, ist zu erkennen, dass durch die beiden Federn 11 und die Anschläge 12 ein Bewegungsbereich 13 festgelegt wird, innerhalb welchem eine relative Verschiebung der Vorrichtung 4 in Bezug auf das Gehäuseelement 6 entlang der y-Achse möglich ist. Dieser Bewegungsbereich 13 ist verstellbar ausgebildet und kann hierdurch auf unterschiedliche Einsatzfälle der Vorrichtung 4 angepasst werden.

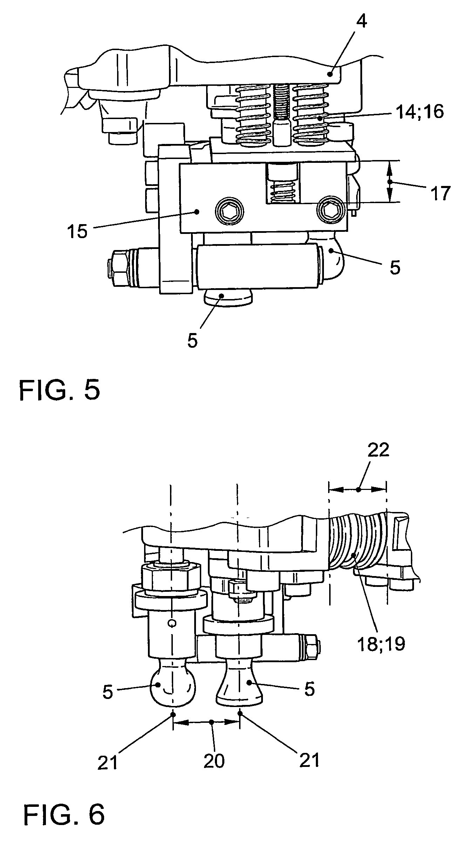

Figur 5 zeigt ein zweites Ausgleichselement 14, welches zwischen einem die Formrollen 5 lagernden Trägerelement 15 und der Vorrichtung 4 angeordnet ist, in einer vergrößerten Darstellung. Hierdurch wird eine relative Bewegung zwischen den Formrollen 5 bzw. dem Trägerelement 15 und der Vorrichtung 4 zum Ausgleich von Höhenunterschieden ermöglicht. Durch das als Feder 16 ausgebildete Ausgleichselement 14 wird ein Bewegungsbereich 17 der Formrollen 5 bzw. des Trägerelementes 15 parallel zur, in Figur 2 und Figur 3 dargestellten, z-Achse festgelegt. Zur Anpassung an unterschiedliche Einsatzfälle der Vorrichtung 4, ist der Bewegungsbereich 17 verstellbar ausgebildet.

Figur 6 zeigt das dritte Ausgleichselement 18 in einer vergrößerten Darstellung. Durch das den Formrollen 5 zugeordnete und als Feder 19 ausgebildete dritte Ausgleichselement 18 lässt sich ein Achsabstand 20 zwischen den Mittelachsen 21 der beiden Formrollen 5 an wechselnde Flanschdicken entlang des Flansches der Karosserieöffnung anpassen. Durch die Feder 19 wird ein Bewegungsbereich 22 festgelegt, innerhalb welchem sich die Formrollen 5 relativ zueinander bewegen können.

Durch die Verwendung einer geeigneten Software mit Drehwinkelüberwachung und einem kompatiblen Antrieb kann ein kontrollierter schlupffreier Rollforming-Prozess realisiert werden. Hierbei wird das aus Vorrichtung 4, Software und Antrieb bestehende Gesamtpaket als zusätzliche Roboterachse konzipiert.

### BEZUGSZEICHENLISTE

- 1: Arbeitsstation
- 2: Kraftfahrzeugkarosserie
- 3: Handhabungselement
- 4: Vorrichtung
- 5: Formrolle

- 6: Gehäuseelement
- 7: Ausgleichselement
- 8: Führung
- 9: Öffnung
- 10: Bauteil

- 11: Feder
- 12: Anschlag
- 13: Bewegungsbereich
- 14: Ausgleichselement
- 15: Trägerelement

- 16: Feder
- 17: Bewegungsbereich
- 18: Ausgleichselement
- 19: Feder
- 20: Achsabstand

- 21: Mittelachse
- 22: Bewegungsbereich

## Patentansprüche

1. Eine an einem Handhabungselement (3) fixierbare Vorrichtung (4) zur Befestigung eines Dichtungsprofils auf einem Flansch, insbesondere einem Flansch einer Karosserieöffnung, mit zwei drehbar ausgebildeten Formrollen (5), welche derart angeordnet sind, dass sie das auf dem Flansch angeordnete Dichtungsprofil zwischen sich aufnehmen und eine Verformungskraft auf das Dichtungsprofil übertragen, wobei zwischen einem zur Fixierung an dem Handhabungselement (3) vorgesehenen und die Vorrichtung (4) aufnehmenden Gehäuseelement (6) und der Vorrichtung (4) ein Ausgleichselement (7) angeordnet ist, welches eine Relativbewegung zwischen der Vorrichtung (4) und dem Handhabungselement (3) ermöglicht, **dadurch gekennzeichnet, dass** zwischen einem die Formrollen (5) lagernden Trägerelement (15) und der Vorrichtung (4) ein eine Relativbewegung zwischen dem Trägerelement (15) und der Vorrichtung (4) ermöglichendes zweites Ausgleichselement (14) vorgesehen ist und dass zumindest einer der Formrollen (5) ein drittes Ausgleichselement (18) zugeordnet ist, durch welches ein Achsabstand (20) zwischen den beiden Formrollen (5) an eine wechselnde Flanschdicke anpassbar ist.

2. Vorrichtung (4) nach Anspruch 1, **dadurch gekennzeichnet, dass** zumindest eines der Ausgleichselemente (7, 14, 18) elastisch verformbar ausgebildet ist.

3. Vorrichtung (4) nach den Ansprüchen 1 oder 2, **dadurch gekennzeichnet, dass** zumindest eines der Ausgleichselemente (7, 14, 18) zumindest eine Feder (11, 16, 19) aufweist.

4. Vorrichtung (4) nach zumindest einem der vorangehenden Ansprüche, **dadurch gekennzeichnet, dass** zwischen dem die Vorrichtung (4) aufnehmenden Gehäuseelement (6) und der Vorrichtung (4) eine Führung (8) vorgesehen ist.

5. Vorrichtung (4) nach zumindest einem der vorangehenden Ansprüche, **dadurch gekennzeichnet, dass** der Achsabstand (20) der Formrollen (5) einstellbar ist.

6. Vorrichtung (4) nach zumindest einem der vorangehenden Ansprüche, **dadurch gekennzeichnet, dass** die durch die Formrollen (5) übertragende Verformungskraft stufenlos einstellbar ist.

7. Vorrichtung (4) nach zumindest einem der vorangehenden Ansprüche, **gekennzeichnet durch**, eine Sensoreinrichtung zur Überprüfung der Lage des Dichtungsprofils.

8. Vorrichtung (4) nach zumindest einem der vorangehenden Ansprüche, **dadurch gekennzeichnet, dass** die Vorrichtung (4) mittels eines programmierten Handhabungselementes (3) entlang einer definierten Bahn verfahrbar ist.

9. Verfahren zur Befestigung eines Dichtungsprofils auf einem Flansch, insbesondere einem Flansch einer Karosserieöffnung, mittels einer an einem Handhabungselement (3) fixierten Vorrichtung (4) mit zwei drehbar ausgebildeten Formrollen (5), welche derart angeordnet werden, dass sie das auf dem Flansch angeordnete Dichtungsprofil zwischen sich aufnehmen und eine Verformungskraft auf das Dichtungsprofil übertragen, und bei welchem durch ein erstes Ausgleichselement (7) ein wechselnder Abstand des Handhabungselementes (3) von dem Flansch senkrecht zu einer Vorschubrichtung (V) der Vorrichtung (4) ausgeglichen wird, **dadurch gekennzeichnet, dass** durch ein zweites Ausgleichselement (14) Höhenunterschiede des Flansches und durch ein drittes Ausgleichselement (18) wechselnde Flanschdicken entlang eines Flanschverlaufes ausgeglichen werden.

10. Verfahren nach Anspruch 9, **dadurch gekennzeichnet, dass** zumindest eines der Ausgleichselemente (7, 14, 18) elastisch verformt wird.

11. Verfahren nach den Ansprüchen 9 oder 10, **dadurch gekennzeichnet, dass** ein Achsabstand (20) der Formrollen (5) eingestellt wird.

12. Verfahren nach zumindest einem der Ansprüche 9 bis 11, **dadurch gekennzeichnet, dass** die durch die Formrollen (5) übertragende Verformungskraft stufenlos eingestellt wird.

13. Verfahren nach zumindest einem der Ansprüche 9 bis 12, **dadurch gekennzeichnet, dass** die Vorrichtung (4) mittels eines programmierten Handhabungselementes (3) entlang einer definierten Bahn verfahren wird.

## Claims

1. Device (4), fixable to a handling element (3), for fastening a sealing profile to a flange, in particular a flange of a vehicle body orifice, with two rotatably designed forming rollers (5) which are arranged in such a way that they receive between them the sealing profile arranged on the flange and transmit a deforming force to the sealing profile, there being arranged, between a housing element (6) provided for fixing to the handling element (3) and receiving the device (4) and the device (4), a compensating element (7) which allows a relative movement between the device (4) and the handling element (3), **characterized in that**, between a carrier element (15) supporting the forming rollers (5) and the device (4), a second compensating element (14) allowing a relative movement between the carrier element (15) and the device (4) is provided, and **in that** at least one of the forming rollers (5) is assigned a third compensating element (18), by means of which a centre distance (20) between the two forming rollers (5) can be adapted to a changing flange thickness.

2. Device (4) according to Claim 1, **characterized in that** at least one of the compensating elements (7, 14, 18) is designed to be elastically deformable.

3. Device (4) according to either one of Claims 1 and 2, **characterized in that** at least one of the compensating elements (7, 14, 18) has at least one spring (11, 16, 19).

4. Device (4) according to at least one of the preceding claims, **characterized in that** a guide (8) is provided between the housing element (6) receiving the device (4) and the device (4).

5. Device (4) according to at least one of the preceding claims, **characterized in that** the centre distance (20) of the forming rollers (5) is adjustable.

6. Device (4) according to at least one of the preceding claims, **characterized in that** the deforming force transmitted by the forming rollers (5) is adjustable continuously.

7. Device (4) according to at least one of the preceding claims, **characterized by** a sensor arrangement for checking the position of the sealing profile.

8. Device (4) according to at least one of the preceding claims, **characterized in that** the device (4) can be moved along a defined path by means of a programmed handling element (3).

9. Method for fastening a sealing profile to a flange, in particular a flange of a vehicle body orifice, by means of a device (4) fixed to a handling element (3) and having two rotatably designed forming rollers (5) which are arranged in such a way that they receive between them the sealing profile arranged on the flange and transmit a deforming force to the sealing profile, and in which a change in distance of the handling element (3) from the flange of the device (4) is compensated for perpendicularly to a feed direction (V) by means of a first compensating element (7), **characterized in that**, along the run of a flange, height differences of the flange are compensated for by means of a second compensating element (14) and changing flange thicknesses are compensated for by means of a third compensating element (18).

10. Method according to Claim 9, **characterized in that** at least one of the compensating elements (7, 14, 18) is deformed elastically.

11. Method according to either one of Claims 9 and 10, **characterized in that** a centre distance (20) of the forming rollers (5) is adjusted.

12. Method according to at least one of Claims 9 to 11, **characterized in that** the deforming force transmitted by the forming rollers (5) is adjusted continuously.

13. Method according to at least one of Claims 9 to 12, **characterized in that** the device (4) is moved along a defined path by means of a programmed handling element (3).

## Revendications

1. Dispositif (4) pouvant être fixé sur un élément de manipulation (3) pour la fixation d'un profilé d'étanchéité sur une bride, notamment une bride d'une ouverture de carrosserie, comprenant deux rouleaux façonnés (5) réalisés de manière rotative, qui sont disposés de telle sorte qu'ils reçoivent entre eux le profilé d'étanchéité disposé sur la bride, et qu'ils transmettent une force de déformation au profilé d'étanchéité, un élément de compensation (7) qui permet un mouvement relatif entre le dispositif (4) et l'élément de manipulation (3) étant disposé entre un élément de boîtier (6) prévu pour la fixation sur l'élément de manipulation (3) et recevant le dispositif (4), et le dispositif (4), **caractérisé en ce qu'**entre un élément de support (15) supportant les rouleaux façonnés (5) et le dispositif (4) est prévu un deuxième élément de compensation (14) permettant un mouvement relatif entre l'élément de support (15) et le dispositif (4), et **en ce qu'**au moins l'un des rouleaux façonnés (5) est associé à un troisième élément de compensation (18), qui permet d'adapter une distance axiale (20) entre les deux rouleaux façonnés (5) à une épaisseur de bride variable.

2. Dispositif (4) selon la revendication 1, **caractérisé en ce qu'**au moins l'un des éléments de compensation (7, 14, 18) est réalisé de manière déformable élastiquement.

3. Dispositif (4) selon les revendications 1 ou 2, **caractérisé en ce qu'**au moins l'un des éléments de compensation (7, 14, 18) présente au moins un ressort (11, 16, 19).

4. Dispositif (4) selon au moins l'une quelconque des revendications précédentes, **caractérisé en ce que** l'on prévoit entre l'élément de boîtier (6) recevant le dispositif (4) et le dispositif (4) un guide (8).

5. Dispositif (4) selon au moins l'une quelconque des revendications précédentes, **caractérisé en ce que** la distance axiale (20) entre les rouleaux façonnés (5) peut être ajustée.

6. Dispositif (4) selon au moins l'une quelconque des revendications précédentes, **caractérisé en ce que** la force de déformation transmise par les rouleaux façonnés (5) peut être ajustée en continu.

7. Dispositif (4) selon au moins l'une quelconque des revendications précédentes, **caractérisé par** un dispositif de capteur pour contrôler la position du profilé d'étanchéité.

8. Dispositif (4) selon au moins l'une quelconque des revendications précédentes, **caractérisé en ce que** le dispositif (4) peut être déplacé le long d'une trajectoire définie au moyen d'un élément de manipulation (3) programmé.

9. Procédé de fixation d'un profilé d'étanchéité sur une bride, notamment une bride d'une ouverture d'une carrosserie, au moyen d'un dispositif (4) fixé sur un élément de manipulation (3), avec deux rouleaux façonnés (5) réalisés de manière rotative, qui sont disposés de telle sorte qu'ils reçoivent entre eux le profilé d'étanchéité disposé sur la bride et qu'ils transmettent une force de déformation au profilé d'étanchéité, et dans lequel une distance variable de l'élément de manipulation (3) à la bride perpendiculairement à une direction d'avance (V) du dispositif (4) est compensée par un premier élément de compensation (7), **caractérisé en ce que** des différences de hauteur de la bride peuvent être compensées par un deuxième élément de compensation (14) et des épaisseurs variables de la bride le long d'une étendue de la bride peuvent être compensées par un troisième élément de compensation (18).

10. Procédé selon la revendication 9, **caractérisé en ce qu'**au moins l'un des éléments de compensation (7, 14, 18) est déformé élastiquement.

11. Procédé selon les revendications 9 ou 10, **caractérisé en ce qu'**une distance axiale (20) entre les rouleaux façonnés (5) est ajustée.

12. Procédé selon au moins l'une quelconque des revendications 9 à 11, **caractérisé en ce que** la force de déformation transmise par les rouleaux façonnés (5) est ajustée en continu.

13. Procédé selon au moins l'une quelconque des revendications 9 à 12, **caractérisé en ce que** le dispositif (4) est déplacé au moyen d'un élément de manipulation (3) programmé le long d'une trajectoire définie.
